# EUROPÄISCHE PATENTSCHRIFT

(11) **EP 4 244 471 B1**
(45) Veröffentlichungstag und Bekanntmachung des Hinweises auf die Patenterteilung: **18.03.2026**
(21) Anmeldenummer: 21794784.5
(22) Anmeldetag: 15.10.2021
(51) Int. Cl.: F01N 3/025, F01N 3/20, F01N 1/14, F01N 3/22, F01N 3/30

(54) **VERBRENNUNGSKRAFTMASCHINE FÜR EIN KRAFTFAHRZEUG, INSBESONDERE FÜR EINEN KRAFTWAGEN**
INTERNAL COMBUSTION ENGINE FOR A MOTOR VEHICLE, IN PARTICULAR FOR A CAR
MOTEUR À COMBUSTION INTERNE POUR VÉHICULE MOTORISÉ, EN PARTICULIER POUR VOITURE

(30) Priorität: 16.11.2020 DE 102020007000
(43) Veröffentlichungstag der Anmeldung: 20.09.2023
(73) Patentinhaber: Mercedes-Benz Group AG, 70372 Stuttgart (DE)
(72) Erfinder: BRINKERT, Nils, 71636 Ludwigsburg (DE); WEYMANN, Hardy, 78727 Oberndorf (DE); SCHATTNER, Marvin, 73734 Esslingen am Neckar (DE); FENZL, Markus, 74670 Forchtenberg (DE)
(74) Vertreter: Novagraaf Group
(86) Internationale Anmeldenummer: PCT/EP2021/078564
(87) Internationale Veröffentlichungsnummer: WO 2022/100956

(56) Entgegenhaltungen:
- WO-A1-2019/030315
- DE-A1- 10 357 038
- DE-A1- 102008 032 601
- DE-A1- 102008 032 604
- DE-A1- 102017 113 366
- US-A- 4 520 624

## Beschreibung

Die Erfindung betrifft eine Verbrennungskraftmaschine für ein Kraftfahrzeug, insbesondere für einen Kraftwagen, gemäß dem Urbegriff von Patentanspruch 1.

Eine solche Verbrennungskraftmaschine für ein Kraftfahrzeug, insbesondere für einen Kraftwagen, ist beispielsweise bereits der DE 100 38 7 24 A1 als bekannt zu entnehmen. Die Verbrennungskraftmaschine weist einen von Abgas aus wenigstens einem Brennraum der Verbrennungskraftmaschine durchströmbaren Abgastrakt und eine Sekundärluftleitung auf, welche von Sekundärluft durchströmbar ist. Mittels der Sekundärluftleitung kann die die Sekundärluftleitung durchströmende Sekundärluft in den Abgastrakt eingeleitet werden. Die Verbrennungskraftmaschine weist außerdem eine in dem Abgastrakt angeordnete Zündeinrichtung auf, mittels welcher ein Gemisch gezündet werden kann, das die in den Abgastrakt eingeleitete Sekundärluft und, insbesondere unverbrannte und brennbare, Kraftstoffanteile umfasst. Außerdem weist die Verbrennungskraftmaschine einen von Frischluft durchströmbaren Ansaugtrakt auf, mittels welchem die den Ansaugtrakt durchströmende Frischluft in den Brennraum einleitbar ist. Die Frischluft kann Bestandteil eines Verbrennungsgemisches sein, das die Frischluft sowie gegebenenfalls rückgeführtes Abgas und/oder unverbrannten Kraftstoff umfassen kann. Des Weiteren offenbart die DE 100 31 924 A1 ein Verfahren zur Überprüfung der Wirksamkeit von wenigstens einer Maßnahme zur Aufheizung eines Katalysators im Abgas einer Brennkraftmaschine. Außerdem offenbart die DE 10 2008 032 601 A1 ein Verfahren zum Einstellen eines Zustandes eines Abgasstroms einer Brennkraftmaschine eines Kraftfahrzeuges.

Aufgabe der vorliegenden Erfindung ist es, eine Verbrennungskraftmaschine der eingangs genannten Art zu verbessern.

Diese Aufgabe wird durch eine Verbrennungskraftmaschine mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um eine Verbrennungskraftmaschine der im Oberbegriff des Patentanspruchs 1 angegebenen Art zu verbessern, ist es erfindungsgemäß vorgesehen, dass die Sekundärluftleitung mit dem Ansaugtrakt an einer Abzweigstelle fluidisch verbunden ist, welche stromab eines in dem Ansaugtrakt angeordneten und zum Verdichten der Frischluft ausgebildeten Verdichters und stromauf einer in dem Ansaugtrakt angeordneten Drosselklappe, mittels welcher eine dem Brennraum zuzuführende Menge der Frischluft einstellbar ist, angeordnet ist. An der Abzweigstelle ist zumindest ein Teil der Frischluft mittels der Sekundärluftleitung aus dem Ansaugtrakt abzweigbar und als die Sekundärluft in den Abgastrakt einleitbar ist. Mit anderen Worten, mittels der Sekundärluftleitung kann an der Abzweigstelle zumindest ein Teil der Frischluft aus dem Ansaugtrakt abgezweigt und in die Sekundärluftleitung eingeleitet werden. Der an der Abzweigstelle abgezweigte und in die Sekundärluftleitung eingeleitete Teil der Frischluft aus dem Ansaugtrakt wird mittels der Sekundärluftleitung zu dem Abgastrakt geführt und als die Sekundärluft in den Abgastrakt eingeleitet. Dies bedeutet, dass der abgezweigte Teil der Frischluft als die Sekundärluft verwendet wird, die in den Abgastrakt eingeleitet und genutzt wird, um die im Abgas enthaltenen, unverbrannten und brennbaren Kraftstoffanteile, die aus dem Brennraum stammen und unverbrannt aus dem Brennraum in den Abgastrakt gelangt sind, zu verbrennen.

Des Weiteren ist es vorgesehen, dass die Zündeinrichtung als eine Zündkerze ausgebildet ist, mittels welcher auf einfache und somit kosten- und gewichtsgünstige Weise die Kraftstoffanteile in dem die Sekundärluft umfassenden Gemisch gezielt und bedarfsgerecht gezündet und in der Folge verbrannt werden können.

Durch die Erfindung wird beispielsweise in einem Kaltstart der Verbrennungskraftmaschine ein Nachzünden beziehungsweise Verbrennen der Kraftstoffanteile in Kombination mit der Sekundärluft mit besonders geringer Zeitverzögerung erreicht, sodass beispielsweise eine im Abgastrakt angeordnete Abgasnachbehandlungseinrichtung zum Nachbehandeln des Abgases effektiv und schnell erwärmt werden kann. Dadurch kann ein besonders emissionsarmer Betrieb der Verbrennungskraftmaschine gewährleistet werden.

Mittels der Zündkerze ist eine schnelle Zündung des Gemisches in dem auch als Abgassystem bezeichneten Abgastrakt möglich, wodurch beispielsweise ein Emissionsabbrand darstellbar ist. Unter dem Emissionsabbrand ist zu verstehen, dass durch das Zünden und Verbrennen des Gemisches im Abgas etwaig enthaltene Emissionen wie insbesondere die unverbrannten und brennbaren Kraftstoffanteile abgebrannt beziehungsweise verbrannt werden können. Dadurch können beispielsweise übermäßige Emissionen an unverbrannten Kohlenwasserstoffen (HC) vermieden werden. Außerdem kann die beispielsweise als Katalysator ausgebildete oder wenigstens einen Katalysator umfassende Abgasnachbehandlung effektiv und in kurzer Zeit aufgeheizt und somit besonders vorteilhaft auf ihre Anspringtemperatur (light-off-Temperatur) gebracht werden, sodass der Kaltstart bzw. eine sich an einen Kaltstart anschließende Kaltstartphase besonders kurzgehalten werden kann. Im Vergleich zu anderen Heizsystemen ist die Zündkerze besonders einfach und somit kostengünstig.

Die Verbrennungskraftmaschine wird beispielsweise nach ihrem beziehungsweise während ihres Kaltstarts mit Sekundärluft, das heißt mit Sekundärlufteinblasung betrieben. Hierunter ist zu verstehen, dass die Sekundärluft in den Abgastrakt eingeleitet, insbesondere eingeblasen, wird. Die Sekundärluft umgeht beispielsweise alle Brennräume der Verbrennungskraftmaschine und stammt somit nicht aus dem Brennraum. Erfindungsgemäß kommt der Sekundärluftleitung eine Doppelfunktion zu. Einerseits wird die Sekundärluftleitung genutzt, um zumindest den genannten Teil der Frischluft aus dem Ansaugtrakt als Sekundärluft zu nutzen und die Sekundärluft in den Abgastrakt einzuleiten. Andererseits kann die Sekundärluftleitung als Schubumluftleitung, insbesondere in Kombination mit einem Schubumluftventil, genutzt werden, da die Abzweigstelle stromab des Verdichters beziehungsweise eines Verdichterrads und stromauf der Drosselklappe angeordnet ist. Wird beispielsweise mittels des Verdichters die Frischluft verdichtet, und kommt es dann zu einem abrupten Schließen der Drosselklappe, so kann beispielsweise mittels der Sekundärluftleitung Frischluft aus dem Ansaugtrakt entnommen werden, sodass ein übermäßiges Abbremsen des Verdichterrads durch das abrupte Schließen der Drosselklappe vermieden werden kann.

Bei der Erfindung ist der Sekundärluftleitung ein als das genannte Schubumluftventil ausgebildetes Ventilelement zugeordnet ist, mittels welchem der Teil, das heißt eine Menge der an der Abzweigstelle in die Sekundärluftleitung einzuleitenden und als die Sekundärluft in den Abgastrakt einzuleitende Menge der Frischluft einstellbar ist. Wieder mit anderen Worten ausgedrückt ist das Ventilelement ein sogenanntes Kombiventil. Zum einen kann das Kombiventil genutzt werden, um die Menge der in die Sekundärluftleitung einzuleitenden Frisch- beziehungsweise Sekundärluft einzustellen. Zum anderem kann das Kombiventil genutzt werden, um zumindest einen Teil der zunächst zwischen dem Verdichterrad und der Drosselklappe angeordneten Frischluft aus dem Ansaugtrakt abzuzweigen. Dies bedeutet, dass über das Ventilelement als Schubumluftventil bei einem Schließen der zunächst geöffneten Drosselklappe zumindest ein Teil der zunächst zwischen dem Verdichter und der Drosselklappe angeordneten Frischluft als Schubumluft aus dem Ansaugtrakt abzweigbar und von der Abzweigstelle zu einer stromauf des Verdichters angeordneten Stelle rückführbar und an der Stelle in den Ansaugtrakt einleitbar ist. Somit kombiniert sozusagen die Erfindung ein Sekundärluftsystem mit einem Schubumluftsystem beziehungsweise fasst diese System zusammen. Dadurch können die Teileanzahl und die Kosten der Verbrennungskraftmaschine in einem besonders geringen Rahmen gehalten werden.

Eine weitere Ausführungsform zeichnet sich dadurch aus, dass in dem Abgastrakt eine von dem Abgas antreibbare Turbine angeordnet ist. Dadurch kann ein besonders vorteilhafter und effizienter Betrieb der Verbrennungskraftmaschine realisiert werden.

Dabei ist vorzugsweise eine Einleitstelle vorgesehen, an welcher die Sekundärluftleitung fluidisch mit dem Abgastrakt verbunden und die Sekundärluft aus der Sekundärluftleitung in den Abgastrakt einleitbar ist, wodurch ein besonders vorteilhafter Betrieb darstellbar ist.

Bei einer besonders vorteilhaften Ausführungsform der Erfindung ist die Einleitstelle in einem strömungstechnisch parallel zu der Turbine geschalteten Umgehungskanal angeordnet, über welchen die Turbine von zumindest einem Teil des Abgases zu umgehen ist. Dadurch kann die Sekundärluft in den Abgastrakt eingeleitet werden, ohne die Turbine beziehungsweise deren Betrieb übermäßig zu beeinflussen.

Bei einer alternativen Ausführungsform der Erfindung ist die Einleitstelle stromab oder stromauf der Turbine in dem Abgastrakt angeordnet und strömungstechnisch seriell zu der Turbine geschaltet, wodurch sich ein besonders vorteilhafter Betrieb darstellen lässt.

Des Weiteren wird erfindungsgemäß wenigstens eine oder mehrere Zündkerzen im Abgastrakt verwendet, insbesondere zwischen einem Auslassventil des Brennraums und der Abgasnachbehandlungseinrichtung. Durch Erwärmung der Zündkerzen kann beispielsweise ein fettes Brennraumgemisch aus dem Brennraum in Verbindung mit der Sekundärluft, welche in den Abgastrakt eingeleitet wurde, gezündet und schließlich verbrannt werden, wobei beispielsweise das Brennraumgemisch und die Sekundärluft das zuvor genannte Gemisch bilden. Mithilfe der Zündkerze kann das Brennraumgemisch in Verbindung mit der Sekundärluft bedarfsgerecht und insbesondere frühzeitig verbrannt werden, sodass der Kaltstart als kurzgehalten und insbesondere in Hinblick auf Emissionen und Komfort vorteilhaft durchgeführt werden kann.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer erfindungsgemäßen Verbrennungskraftmaschine gemäß einer ersten Ausführungsform; und
- Fig. 2: eine schematische Darstellung der Verbrennungskraftmaschine gemäß einer zweiten Ausführungsform.

In den Figuren sind gleiche oder funktionsgleiche Elemente mit gleichen Bezugszeichen versehen.

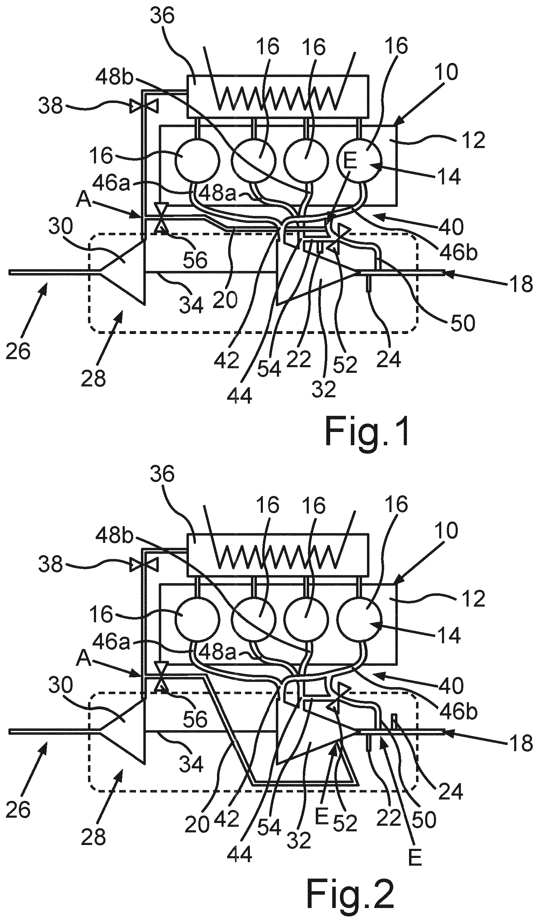

Fig. 1 zeigt in einer schematischen Darstellung eine vorliegend als Hubkolbenmotor ausgebildete Verbrennungskraftmaschine 10 für ein Kraftfahrzeug, insbesondere für einen vorzugsweise als Personenkraftwagen ausgebildeten Kraftwagen. Somit umfasst das Kraftfahrzeug in seinem vollständig hergestellten Zustand die Verbrennungskraftmaschine 10 und ist mittels der Verbrennungskraftmaschine 10 verbrennungsmotorisch antreibbar. Die Verbrennungskraftmaschine 10 umfasst ein Zylindergehäuse 12, durch welches mehrere Zylinder 14 der Verbrennungskraftmaschine 10 gebildet beziehungsweise begrenzt sind. Der jeweilige Zylinder 14 begrenzt teilweise einen jeweiligen Brennraum 16 der Verbrennungskraftmaschine 10. Während eines befeuerten Betriebs der Verbrennungskraftmaschine 10 laufen in den Brennräumen 16 Verbrennungsvorgänge ab, woraus Abgas der Verbrennungskraftmaschine 10 resultiert.

Die Verbrennungskraftmaschine 10 weist einen Abgastrakt 18 auf, welcher von dem Abgas aus den Brennräumen 16 durchströmbar ist. Außerdem umfasst die Verbrennungskraftmaschine 10 eine von Sekundärluft durchströmbare Sekundärluftleitung 20, mittels welcher die die Sekundärluftleitung 20 durchströmende Sekundärluft in den Abgastrakt 18, insbesondere an einer Einleitstelle E, einleitbar ist. Die die Sekundärluftleitung 20 durchströmende Sekundärluft umgeht die beziehungsweise alle Brennräume 16 der Verbrennungskraftmaschine 10 und strömt somit nicht durch die Brennräume 16 beziehungsweise durch keinen Brennraum 16 der Verbrennungskraftmaschine 10.

Die Verbrennungskraftmaschine 10 weist außerdem wenigstens eine oder mehrere, in dem Abgastrakt angeordnete Zündkerzen 22, 24 auf, wobei mittels der jeweiligen Zündkerze 22 beziehungsweise 24 ein Gemisch in dem Abgastrakt 18 gezündet werden kann. Das Gemisch umfasst die in den Abgastrakt 18 eingeleitete Sekundärluft und unverbrannte und daher noch brennbare Kraftstoffanteile, die unverbrannt aus zumindest einem der Brennräume 16 entwichen und in den Abgastrakt 18 gelangt sind. Des Weiteren umfasst die Verbrennungskraftmaschine 10 einen von Frischluft durchströmbaren Ansaugtrakt 26, mittels welchem die den Ansaugtrakt 26 durchströmende Frischluft zu den und in die Brennräume 16 geführt wird.

Die Verbrennungskraftmaschine 10 umfasst dabei einen Abgasturbolader 28, welcher einen in dem Ansaugtrakt 26 angeordneten Verdichter 30 und eine in dem Abgastrakt 18 angeordnete Turbine 32 aufweist. Die Turbine 32 ist von dem Abgas antreibbar, wobei der Verdichter 30, insbesondere über eine Welle 34 des Abgasturboladers 28, von der Turbine 32 antreibbar ist. Durch Antreiben des Verdichters 30 wird mittels des Verdichters 30 die den Ansaugtrakt 26 durchströmende Frischluft verdichtet.

In Strömungsrichtung der den Ansaugtrakt 26 durchströmenden Frischluft ist stromab des Verdichters 30 und insbesondere stromauf der Brennräume 16 ein Ladeluftkühler 36 angeordnet, mittels welchem die Frischluft gekühlt wird, bevor sie in die Brennräume 16 einströmt. Außerdem ist in dem Ansaugtrakt 26 eine Drosselklappe 38 angeordnet. Die Drosselklappe 38 ist stromauf des Ladeluftkühlers 36 und stromab des Verdichters 30 angeordnet. Mittels der Drosselklappe 38 wird eine Menge der den Brennräumen 16 zuzuführenden Frischluft eingestellt. In Fig. 1 ist ferner erkennbar, dass, insbesondere mittels eines in dem Abgastrakt 18 angeordneten Abgaskrümmers 40, zwei erste der Brennräume 16 zu einer ersten Abgasflut 42 und zwei zweite der Brennräume 16 zu einer zweiten Abgasflut 44 zusammengeführt sind. Dem jeweiligen ersten Brennraum 16 ist eine jeweilige, beispielsweise durch den Abgaskrümmer 40 gebildete, erste Abgasleitung 46a beziehungsweise 46b zugeordnet, wobei die Abgasleitungen 46a, b zu der gemeinsamen Abgasflut 42 zusammengeführt sind beziehungsweise in die Abgasflut 42 münden. Dem jeweiligen zweiten Brennraum 16 ist eine jeweilige zweite Abgasleitung 48a beziehungsweise 48b zugeordnet, wobei die Abgasleitungen 48a und 48b in die gemeinsame Abgasflut 44 münden beziehungsweise zu der Abgasflut 44 zusammengeführt sind. Die Turbine 32 ist somit vorzugsweise als zweiflutige Turbine ausgebildet.

Der Turbine 32 ist ein Umgehungskanal 50 zugeordnet, welcher von der Abgasleitung 46b abzweigt. Bezogen auf die Abgasleitungen 46a, b und 48a, b zweigt der Umgehungskanal 50 vorzugsweise ausschließlich von der Abgasleitung 46b ab. Die Umgehungsleitung 50 ist an einer ersten Verbindungsstelle und an einer zweiten Verbindungsstelle fluidisch mit dem Abgastrakt 18 verbunden. Insbesondere ist der Umgehungskanal 50 an der ersten Verbindungsstelle fluidisch mit der Abgasleitung 46b verbunden. An der ersten Verbindungsstelle kann mittels des Umgehungskanals 50 zumindest ein Teil des die Abgasleitung 46b durchströmenden Abgases aus der Abgasleitung 46b abgezweigt und in den Umgehungskanal 50 eingeleitet werden. Das in den Umgehungskanal 50 eingeleitete Abgas wird mittels des Umgehungskanals 50 zu der zweiten Verbindungsstelle geleitet und an der zweiten Verbindungsstelle wieder in den Abgastrakt 18 eingeleitet. Dabei ist die erste Verbindungsstelle stromauf der Turbine 32 angeordnet, während die zweite Verbindungsstelle stromab der Turbine 32 angeordnet ist. Somit umgeht das den Umgehungskanal 50 durchströmende Abgas die Turbine 32. Dies bedeutet, dass das den Umgehungskanal 50 durchströmende Abgas die Turbine 32 nicht antreibt. Dem Umgehungskanal 50 ist ein Ventilelement 52 zugeordnet, mittels welchem eine Menge des den Umgehungskanal 50 durchströmenden Abgases einstellbar ist. Somit können mittels des Umgehungskanals 50 und mittels des Ventilelements 52 eine Leistung der Turbine 32 und somit ein Ladedruck, auf welchem die Frischluft mittels des Verdichters 30 verdichtet wird, eingestellt, insbesondere geregelt, werden.

Des Weiteren weist der Abgastrakt 18 eine Verbindungsleitung 54 auf, über welche der Umgehungskanal 50 und die Abgasflut 44 fluidisch miteinander verbunden oder verbindbar sind. Das Ventilelement 52 wird auch als Wastegate-Klappe oder Wastegate-Ventil bezeichnet, da mittels des Ventilelements 52 die Leistung der Turbine 32 und der Ladedruck eingestellt, insbesondere geregelt, werden können. Außerdem wird das Ventilelement 52 als Flutenverbindungsklappe beziehungsweise als Flutenverbindungsventil bezeichnet, da mittels des Ventilelements 52 beispielsweise eine Menge des die Verbindungsleitung 54 durchströmenden Abgases eingestellt werden kann. Wird beispielsweise das Ventilelement 52 verschlossen, sodass der Umgehungskanal 50 verschlossen wird, so strömt das Abgas, welches an der ersten Verbindungsstelle in den Umgehungskanal 50 einströmt, über die Verbindungsleitung 54 beispielsweise in die Abgasflut 44, sodass somit beispielsweise die Abgasflut 44 über die Verbindungsleitung 54 mit dem Umgehungskanal 50 beziehungsweise mit der Abgasleitung 46 b fluidisch verbunden ist.

Es ist erkennbar, dass die Zündkerze 22 in der Verbindungsleitung 54 angeordnet ist. Die Zündkerze 24 ist stromab über Turbine 32 angeordnet. Es ist erkennbar, dass der Umgehungskanal 50 strömungstechnisch parallel zur Turbine 32 geschaltet ist. Die Zündkerze 24 ist strömungstechnisch parallel zu der Turbine 32 geschaltet und stromab der Turbine 32 in dem Abgastrakt 18 angeordnet. Die Zündkerze 22 kann strömungstechnisch sehr reell zu der Turbine 32 geschaltet und stromauf zur Turbine 32 angeordnet sein, oder die Zündkerze 22 ist strömungstechnisch parallel zu der Turbine 32 geschaltet.

Um nun die Sekundärluft auf besonders einfache und somit kosten- bauraum- und gewichtsgünstige Weise zu realisieren, ist die beispielsweise an der Einleitstelle E fluidisch mit dem Abgastrakt 18 verbundene Sekundärluftleitung 20 mit dem Ansaugtrakt 26 an einer Abzweigstelle A fluidisch verbunden, welche in Strömungsrichtung der den Ansaugtrakt 26 durchströmenden Frischluft stromab des Verdichters 30 und stromauf der Drosselklappe 38 angeordnet ist. Mittels der Sekundärluftleitung 20 kann an der Abzweigstelle A zumindest ein Teil der Frischluft aus dem Ansaugtrakt 26 abgezweigt und in die Sekundärluftleitung 20 eingeleitet werden. Die in die Sekundärluftleitung 20 eingeleitete Frischluft strömt durch die Sekundärluftleitung 20 hindurch und wird mittels der Sekundärluftleitung 20 zu der Einleitstelle E geführt und als die Sekundärluft an der Einleitstelle E in den Abgastrakt 18 eingeleitet. Dabei ist der Sekundärluftleitung 20 ein Ventilelement 56 zugeordnet, mittels welchem der Teil, mithin eine Menge der die Sekundärluftleitung 20 durchströmenden Sekundär- bzw. Frischluft einstellbar ist. Vorzugsweise ist das Ventilelement 56 ein einfach auch als Kombiventil bezeichnetes Kombinationsventil, da das Ventilelement 56 einerseits zum Einstellen des Teils, das heißt zum Einstellen der Menge, der die Sekundärluftleitung 20 durchströmenden Sekundärluft verwendet wird. Andererseits wird das Ventilelement 56 beispielsweise als Schubumluftventil verwendet, über welches beispielsweise dann, wenn die zunächst geöffnete Drosselklappe 38 schnell geschlossen wird, zumindest ein Teil der zunächst zwischen dem Verdichter 30 und der Drosselklappe 38 angeordneten Frischluft aus dem Ansaugtrakt 26 abgezweigt werden kann. Dadurch kann dann, wenn die Drosselklappe 38 abrupt geschlossen wird, eine übermäßige Abbremsung des Verdichters 30 beziehungsweise dessen Verdichterrads vermieden werden. Aus Fig. 1 ist erkennbar, dass ein Sekundärluftsystem zum Bereitstellen der Sekundärluft mit einem Schubumluftsystem kombiniert ist, sodass insgesamt im Vergleich zu herkömmlichen Lösungen, Aktoren und Pumpen entfallen können. Somit können das Sekundärluftsystem und das Schubumluftsystem gewichts-, bauraum- und kostengünstig realisiert werden.

Beispielsweise ist die Einleitstelle A in dem auch als Auspuffkrümmer bezeichneten Abgaskrümmer 40 angeordnet, sodass die Sekundärluft in den Auspuffkrümmer eingeblasen beziehungsweise eingeleitet wird. Das Einleiten beziehungsweise Einblasen der Sekundärluft in den Abgastrakt 18 wird auch als Lufteinblasung oder Sekundärlufteinblasung bezeichnet. Die Zündkerze 24 ist vorzugsweise im Bereich eines Austritts der Turbine 32 angeordnet. Stellt beispielsweise zumindest einer der Brennräume 16 ein fettes Brennraumgemisch bereit, welches unverbrannten und somit brennbaren und vorzugsweise flüssigen Kraftstoff, mithin die zuvor genannten Kraftstoffanteile umfasst, so wird das fette Brennraumgemisch mit der Sekundärluft vermischt, wodurch das zuvor genannte Gemisch gebildet wird. Mittels der jeweiligen Zündkerze 22 beziehungsweise 24 kann das Gemisch gezielt und frühzeitig gezündet werden, sodass ein besonders emissionsarmer Betrieb darstellbar ist.

Fig. 2 zeigt eine zweite Ausführungsform der Verbrennungskraftmaschine 10. Bei der zweiten Ausführungsform ist die Einleitstelle E beispielsweise von dem Auspuffkrümmer beabstandet und insbesondere stromab der Turbine 32 angeordnet, insbesondere an einem Austritt eines Turbinenrotors der Turbine 32, deren Turbinenrotor beispielsweise ein Turbinenrad der Turbine umfasst. Ferner ist es denkbar, dass die Einleitstelle E in einem Verlauf des Turbinenrotors angeordnet ist. Hierunter kann insbesondere verstanden werden, dass beispielsweise die Einleitstelle E in Strömungsrichtung des den Abgastrakt 18 durchströmenden Abgases strömungstechnisch auf gleicher Höhe wie das Turbinenrad angeordnet ist.

Ein Vorteil der Verbrennungskraftmaschine 10 ist, dass die Sekundärluft in einen Bereich mir nur geringem Gegendruck eingeblasen werden kann. Somit besteht stets ein hinreichendes Druckgefälle zwischen der stromab des Verdichters 30 angeordneten Abzweigstelle A und der Einleitstelle E. Außerdem kann eine Strömungsverwirbelung nach der Turbine 32 genutzt werden, um die Sekundärluft besonders vorteilhaft mit den Kraftstoffanteilen beziehungsweise mit dem fetten Brennraumgemisch zu verbrennen. Außerdem werden die Zündkerzen 22 und 24 zur auch als Entzündung bezeichneten Zündung des Gemisches verwendet, wodurch das Gemisch effektiv, frühzeitig und kosten- und bauraumgünstig gezündet werden kann.

Vorzugsweise ist in Strömungsrichtung des Abgases stromab der jeweiligen Zündkerze 22 beziehungsweise 24 und auch stromab der Einleitstelle E eine Abgasnachbehandlungseinrichtung zum Nachbehandeln des Abgases angeordnet. Die Abgasnachbehandlungseinrichtung umfasst beispielsweise wenigstens einen Katalysator, welcher als ein Drei-Wege-Katalysator oder als ein SCR-Katalysator ausgebildet sein kann. Durch das Zünden und Verbrennen des Gemisches kann die Abgasnachbehandlungseinrichtung besonders schnell und effizient aufgeheizt werden, sodass sich eine besonders effiziente Aufheizung, insbesondere Katalysator-Aufheizung, realisieren lässt, denn ein Turbinengehäuse der Turbine 32 muss nicht aufgeheizt werden. Insbesondere können bereits vorhandene Bauelemente, insbesondere vor allem in Form des Schubumluftventils genutzt werden, um einen besonders emissionsarmen Betrieb der Verbrennungskraftmaschine 10 darzustellen.

### Bezugszeichenliste

- 10: Verbrennungskraftmaschine
- 12: Zylindergehäuse
- 14: Zylinder
- 16: Brennraum
- 18: Abgastrakt
- 20: Sekundärluftleitung
- 22: Zündkerze
- 24: Zündkerze
- 26: Ansaugtrakt
- 28: Abgasturbolader
- 30: Verdichter
- 32: Turbine
- 34: Welle
- 36: Ladeluftkühler
- 38: Drosselklappe
- 40: Abgaskrümmer
- 42: Abgasflut
- 44: Abgasflut
- 46a, 46b: Abgasleitung
- 48a, 48b: Abgasleitung
- 50: Umgehungskanal
- 52: Ventilelement
- 54: Verbindungsleitung
- 56: Ventilelement
- A: Abzweigstelle
- E: Einleitstelle

## Patentansprüche

1. Verbrennungskraftmaschine (10) für ein Kraftfahrzeug, mit einem von Abgas aus wenigstens einem Brennraum (16) der Verbrennungskraftmaschine (10) durchströmbaren Abgastrakt (18), mit einer von Sekundärluft durchströmbaren Sekundärluftleitung (20), mittels welcher die die Sekundärluftleitung (20) durchströmende Sekundärluft in den Abgastrakt (18) einleitbar ist, mit wenigstens einer in dem Abgastrakt (18) angeordneten Zündeinrichtung (22, 24), mittels welcher ein die in den Abgastrakt (18) eingeleitete Sekundärluft und Kraftstoffanteile umfassendes Gemisch in dem Abgastrakt (18) zu zünden ist, und mit einem von Frischluft durchströmbaren Ansaugtrakt (26), mittels welchem die den Ansaugtrakt (26) durchströmende Frischluft in den Brennraum (16) einleitbar ist,
wobei die Sekundärluftleitung (20) mit dem Ansaugtrakt (26) an einer stromab eines in dem Ansaugtrakt (26) angeordneten und zum Verdichten der Frischluft ausgebildeten Verdichters (30) und stromauf einer in dem Ansaugtrakt (26) angeordneten Drosselklappe (38), mittels welcher eine dem Brennraum (16) zuzuführende Menge der Frischluft einstellbar ist, angeordneten Abzweigstelle (A) fluidisch verbunden ist, an welcher zumindest ein Teil der Frischluft mittels der Sekundärluftleitung (20) aus dem Ansaugtrakt (26) abzweigbar und als die Sekundärluft in den Abgastrakt (18) einleitbar ist, wobei die Zündeinrichtung (22, 24) als eine Zündkerze (22, 24) ausgebildet ist, wobei die Kraftstoffanteile in dem Abgas enthalten sind, aus dem Brennraum (16) stammen und unverbrannt aus dem Brennraum (16) in den Abgastrakt (18) gelangen, wobei ein Ventilelement (56) vorgesehen ist, **dadurch gekennzeichnet dass** das Ventilelement (56) als ein Kombinationsventil ausgebildet ist, mittels welchem einerseits der Teil einstellbar ist, andererseits ist über das Ventilelement (56) als Schubumluftventil bei einem Schließen der zunächst geöffneten Drosselklappe (38) zumindest ein Teil der zunächst zwischen dem Verdichter (30) und der Drosselklappe (38) angeordneten Frischluft als Schubumluft aus dem Ansaugtrakt (26) abzweigbar und von der Abzweigstelle (A) zu einer stromauf des Verdichters (30) angeordneten Stelle rückführbar und an der Stelle in den Ansaugtrakt (30) einleitbar.

2. Verbrennungskraftmaschine (10) nach Anspruch 1,
**dadurch gekennzeichnet, dass**
in dem Abgastrakt (18) eine von dem Abgas antreibbare Turbine (32) angeordnet ist.

3. Verbrennungskraftmaschine (10) nach Anspruch 2,
**gekennzeichnet durch**
eine Einleitstelle (E), an welcher die Sekundärluftleitung (20) fluidisch mit dem Abgastrakt (18) verbunden und die Sekundärluft aus der Sekundärluftleitung (20) in den Abgastrakt (18) einleitbar ist.

4. Verbrennungskraftmaschine (10) nach Anspruch 3,
**dadurch gekennzeichnet, dass**
die Einleitstelle (E) in einem strömungstechnisch parallel zu der Turbine (32) geschalteten Umgehungskanal (50) angeordnet ist, über welchen die Turbine (32) von zumindest einem Teil des Abgases zu umgehen ist.

5. Verbrennungskraftmaschine (10) nach Anspruch 3,
**dadurch gekennzeichnet, dass**
die Einleitstelle (E) stromab oder stromauf der Turbine (32) in dem Abgastrakt (18) angeordnet und strömungstechnisch seriell zu der Turbine (32) geschaltet ist.

## Claims

1. Internal combustion engine (10) for a motor vehicle, comprising an exhaust tract (18) through which exhaust gas from at least one combustion chamber (16) of the internal combustion engine (10) can flow, comprising a secondary air line (20) through which secondary air can flow and by means of which the secondary air flowing through the secondary air line (20) can be introduced into the exhaust tract (18), comprising at least one ignition device (22, 24) arranged in the exhaust tract (18), by means of which ignition device a mixture comprising the secondary air introduced into the exhaust tract (18) and fuel components is to be ignited in the exhaust tract (18), and comprising an intake tract (26) through which fresh air can flow and by means of which the fresh air flowing through the intake tract (26) can be introduced into the combustion chamber (16),
the secondary air line (20) being fluidically connected to the intake tract (26) at a branch point (A) that is arranged downstream of a compressor (30) arranged in the intake tract (26) and designed to compress the fresh air and that is arranged upstream of a throttle valve (38) arranged in the intake tract (26), by means of which throttle valve a quantity of fresh air to be supplied to the combustion chamber (16) can be adjusted, at which branch point at least a portion of the fresh air can be diverted from the intake tract (26) by means of the secondary air line (20) and introduced as the secondary air into the exhaust tract (18), the ignition device (22, 24) being in the form of a spark plug (22, 24), the fuel components being contained in the exhaust gas, originating from the combustion chamber (16) and entering the exhaust tract (18) unburned from the combustion chamber (16), and a valve element (56) being provided, **characterized in that** the valve element (56) is in the form of a combination valve, by means of which, on the one hand, the portion can be adjusted, and on the other hand, via the valve element (56) as a recirculating-air valve, when the initially open throttle valve (38) is closed at least a portion of the fresh air initially located between the compressor (30) and the throttle valve (38) can be diverted as recirculating air from the intake tract (26) and can be returned from the branch point (A) to a point arranged upstream of the compressor (30) and can be introduced into the intake tract (30) at that point.

2. Internal combustion engine (10) according to claim 1,
**characterized in that**
a turbine (32) that can be driven by the exhaust gas is arranged in the exhaust tract (18).

3. Internal combustion engine (10) according to claim 2,
**characterized by**
an inlet point (E) at which the secondary air line (20) is fluidically connected to the exhaust tract (18) and the secondary air from the secondary air line (20) can be introduced into the exhaust tract (18).

4. Internal combustion engine (10) according to claim 3,
**characterized in that**
the inlet point (E) is arranged in a bypass duct (50) that is connected in parallel with the turbine (32) in terms of flow and via which at least a portion of the exhaust gas bypasses the turbine (32).

5. Internal combustion engine (10) according to claim 3,
**characterized in that**
the inlet point (E) is arranged in the exhaust tract (18) downstream or upstream of the turbine (32) and is connected in series with the turbine (32) in terms of flow.

## Revendications

1. Moteur à combustion interne (10) pour un véhicule automobile, comportant une tubulure de gaz d'échappement (18) pouvant être traversée par les gaz d'échappement provenant d'au moins une chambre de combustion (16) du moteur à combustion interne (10), comportant une conduite d'air secondaire (20) pouvant être traversée par de l'air secondaire et au moyen de laquelle l'air secondaire traversant la conduite d'air secondaire (20) peut être introduit dans la tubulure de gaz d'échappement (18), comportant au moins un dispositif d'allumage (22, 24) disposé dans la tubulure de gaz d'échappement (18) et au moyen duquel un mélange comprenant l'air secondaire introduit dans la tubulure de gaz d'échappement (18) et des parts de carburant peut être allumé dans la tubulure de gaz d'échappement (18), et comportant une tubulure d'admission (26) pouvant être traversée par de l'air frais et au moyen de laquelle l'air frais traversant la tubulure d'admission (26) peut être introduit dans la chambre de combustion (16),
dans lequel la conduite d'air secondaire (20) est raccordée de manière fluidique à la tubulure d'admission (26) au niveau d'un point de dérivation (A) situé en aval d'un compresseur (30) disposé dans la tubulure d'admission (26) et configuré pour comprimer l'air frais, et en amont d'un papillon des gaz (38) disposé dans la tubulure d'admission (26) et au moyen duquel une quantité d'air frais à amener à la chambre de combustion (16) peut être réglée, point de dérivation au niveau duquel au moins une part de l'air frais peut être dérivée de la tubulure d'admission (26) au moyen de la conduite d'air secondaire (20) et peut être introduite dans la tubulure de gaz d'échappement (18) en tant qu'air secondaire, dans lequel le dispositif d'allumage (22, 24) est réalisé sous forme de bougie d'allumage (22, 24), dans lequel les parts de carburant sont contenues dans le gaz d'échappement, proviennent de la chambre de combustion (16) et arrivent non brûlées depuis la chambre de combustion (16) dans la tubulure de gaz d'échappement (18), dans lequel un élément formant soupape (56) est prévu, **caractérisé en ce que** l'élément formant soupape (56) est réalisé sous forme de soupape combinée au moyen de laquelle, d'une part, la part peut être réglée, d'autre part, par l'intermédiaire de l'élément formant soupape (56) en tant que soupape d'air de circulation de poussée, lors d'une fermeture du papillon des gaz (38) initialement ouvert, au moins une part de l'air frais disposé initialement entre le compresseur (30) et le papillon des gaz (38) peut être dérivée en tant qu'air de circulation de poussée hors de la tubulure d'admission (26) et peut être renvoyée du point de dérivation (A) vers un point disposé en amont du compresseur (30) et introduite au niveau dudit point dans la tubulure d'admission (30).

2. Moteur à combustion interne (10) selon la revendication 1,
**caractérisé en ce que**
une turbine (32) pouvant être entraînée par le gaz d'échappement est disposée dans la tubulure de gaz d'échappement (18).

3. Moteur à combustion interne (10) selon la revendication 2,
**caractérisé par**
un point d'introduction (E), au niveau duquel la conduite d'air secondaire (20) est raccordée de manière fluidique à la tubulure de gaz d'échappement (18) et l'air secondaire peut être introduit dans la tubulure de gaz d'échappement (18) à partir de la conduite d'air secondaire (20).

4. Moteur à combustion interne (10) selon la revendication 3,
**caractérisé en ce que**
le point d'introduction (E) est disposé dans un canal de contournement (50) monté en parallèle à la turbine (32) du point de vue de la technique d'écoulement, canal de contournement par l'intermédiaire duquel la turbine (32) doit être contournée par au moins une part des gaz d'échappement.

5. Moteur à combustion interne (10) selon la revendication 3,
**caractérisé en ce que**
le point d'introduction (E) est disposé en aval ou en amont de la turbine (32) dans la tubulure de gaz d'échappement (18) et est monté en série avec la turbine (32) du point de vue de la technique d'écoulement.
